(19) **Europäisches Patentamt / European Patent Office / Office européen des brevets**

(11) **EP 2 692 891 B1**

(12) **EUROPEAN PATENT SPECIFICATION**

(45) Date of publication and mention
of the grant of the patent:
**05.05.2021 Bulletin 2021/18**

(21) Application number: **12765772.4**

(22) Date of filing: **29.03.2012**

(51) Int Cl.:
*B23K 9/025* (2006.01)          *B23K 9/23* (2006.01)
*C21D 6/00* (2006.01)           *C21D 9/02* (2006.01)
*C21D 9/50* (2006.01)           *C22C 38/02* (2006.01)
*C22C 38/04* (2006.01)          *C22C 38/06* (2006.01)
*C22C 38/20* (2006.01)          *C22C 38/22* (2006.01)
*C22C 38/24* (2006.01)          *C22C 38/26* (2006.01)
*C22C 38/32* (2006.01)          *C22C 38/42* (2006.01)
*C22C 38/44* (2006.01)          *C22C 38/46* (2006.01)
*C22C 38/48* (2006.01)          *C22C 38/50* (2006.01)
*C22C 38/54* (2006.01)          *C21D 6/02* (2006.01)
*B23K 101/18* (2006.01)         *B23K 9/167* (2006.01)
*B23K 103/04* (2006.01)         *C22C 38/00* (2006.01)
*C22C 38/28* (2006.01)

(86) International application number:
**PCT/JP2012/058422**

(87) International publication number:
**WO 2012/133681 (04.10.2012 Gazette 2012/40)**

(54) **WELDED STRUCTURE OBTAINED BY TIG WELDING FERRITE STAINLESS STEEL EXHIBITING EXCELLENT CORROSION RESISTANCE AND STRENGTH IN WELD ZONES**

GESCHWEISSTE STRUKTUR, ERHALTEN DURCH TIG-SCHWEISSEN VON FERRITISCHEM ROSTFREIEM STAHL MIT AUSGEZEICHNETER KORROSIONSBESTÄNDIGKEIT UND STÄRKE IN DEN SCHWEISSZONEN

STRUCTURE SOUDÉE OBTENUE PAR SOUDAGE TIG D'ACIER INOXYDABLE FERRITIQUE PRÉSENTANT UNE EXCELLENTE RÉSISTANCE À LA CORROSION ET UNE EXCELLENTE RÉSISTANCE MÉCANIQUE DANS DES ZONES DE SOUDURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.03.2011   JP 2011072269**
**09.03.2012   JP 2012053263**

(43) Date of publication of application:
**05.02.2014  Bulletin 2014/06**

(73) Proprietor: **NIPPON STEEL Stainless Steel Corporation**
**Tokyo 100-0005 (JP)**

(72) Inventors:
• **MATSUHASHI,Tooru**
**Tokyo 100-0005 (JP)**

• **NAKATA, Michio**
**Tokyo 100-0005 (JP)**

(74) Representative: **Vossius & Partner Patentanwälte Rechtsanwälte mbB**
**Siebertstrasse 3**
**81675 München (DE)**

(56) References cited:
**JP-A- 6 279 951          JP-A- 11 323 502**
**JP-A- 2005 240 112       JP-A- 2006 263 811**
**JP-A- 2007 302 995       JP-A- 2009 161 836**
**JP-A- 2010 155 276       JP-A- 2010 202 973**
**JP-A- 2011 068 967       JP-A- 2011 105 976**

**Description**

Technical Field

The present invention relates to ferritic stainless steel excellent in corrosion resistance and strength of a weld zone and a TIG welded structure of the same.

Background Art

Ferritic stainless steel is generally excellent in corrosion resistance. Not only this, it is small in coefficient of thermal expansion and excellent in stress corrosion cracking resistance compared with austenitic stainless steel.

When using such stainless steel as a structure, welding work is essential. General use ferritic stainless steel such as SUS430 has small C and N solid solubility limits, so there was the problem that it becomes sensitized at the weld zones (sensitization: meaning Cr is consumed by formation of carbides and, locally, the matrix Cr drops sharply, so the corrosion susceptibility rises) and falls in corrosion resistance. To solve this problem, high purity ferrite steel has been developed which reduces the amounts of C and N or adds Ti, Nb, or other stabilizing elements to immobilize the C and N and thereby suppresses sensitization of the weld metal zones.

On the other hand, it is known that high purity ferrite steel deteriorates in corrosion resistance at the scale parts formed due to the input heat in welding (oxide film on the surface). As a measure against this, it is known that it is possible to suppress the formation of weld scale by sufficient shielding using Ar or another inert gas at the time of welding.

As examples of welded structures of high purity ferritic stainless steel, hot water tanks made of stainless steel are being generally used in electric hot water heaters and heat pump hot water heater with natural refrigerant(CO2). Hot water tanks employ capsule-like structures of heads and shell plates welded together so as to withstand the water pressure. In recent years, demand for higher hot water pressures has been rising. Higher strength has been sought in hot water tanks as well. As this tank material, higher strength of the material itself is also necessary, but improvement of the strength of the weld metal zones of the tank where stress easily concentrates is more important. Furthermore, if issues with the water quality causes the concentration of residual chlorine or the concentration of chloride ions to rise, the environment becomes a highly corrosive one. Further, when it is necessary to add chlorine or another oxidizing agent for sterilization etc., the environment becomes a severely corrosive one in increasing cases. In such an environment, the problem of the corrosion of the weld zone sometimes occurs.

In improvement of the corrosion resistance of a TIG weld zone of ferritic stainless steel, adding Nb and Ti to stabilize the C and N is known art. Further, in TIG welding, formation of oxides at the weld metal zone and heat affected zone (HAZ) at the time of welding is suppressed and deterioration of the corrosion resistance is suppressed by a gas shield using Ar or another inert gas. Application of a gas shield at the front surface which forms the torch side at the time of TIG welding is easy since it just involves attaching a jig for blowing Ar gas to the torch. However, application of a gas shield at the anti-torch side which forms the opposite surface requires a special jig. For this reason, in recent years, from the viewpoint of eliminating steps, cutting Ar gas costs, etc., TIG welding work which omits the Ar gas shield at the weld back surface has been desired. If just omitting the Ar (inert gas) gas shield while leaving the conventional materials and the welding conditions unchanged, just a drop in the weld zone corrosion resistance is caused.

That is, due to this background, development of ferritic stainless steel excellent in corrosion resistance of a TIG weld zone even if omitting an Ar (inert gas) gas shield has been desired. In addition, development of high purity ferritic stainless steel excellent in strength of the weld zone has been desired.

PLT 1 discloses ferritic stainless steel, excellent in corrosion resistance of an oxide film on weld crevice, which is comprised of ferritic stainless steel containing Cr: 22 to 26% characterized in that "there is no argon back shield at a 4 mm or more crevice depth and a maximum crevice depth of 30 $\mu$m or less" and the average Cr ratio of the oxide scale at the weld crevice within 2 mm from the edge of weld interface becomes 20 mass% or more of all metal elements.

PLT 2 discloses the art of defining the range of ingredients of ferritic stainless steel as one example to an "a" value of Cr%+Mo%+1.5Si%+0.5Nb%+0.9Mn%+1.5Ni%$\geq$23 to enable improvement of the corrosion resistance of a weld zone even if omitting a gas shield.

PLT 3 describes to control Ca to 0.0010% or less when omitting the Ar gas shield since sufficient weld scale cannot be formed if CaS is present on the surface of the material.

However, PLT 1 secures the corrosion resistance by the formation of a Cr oxide film even if omitting the shield, but in a severe corrosive environment like the inside of a hot water tank where the crevice is extremely narrow, even if the Cr film is thick, there is an extremely high possibility of the formation of crevice corrosion. Furthermore, PLT 1 does not use a filler metal, so in steel with a Cr content exceeding 22%, the Cr easily absorbs the oxygen or nitrogen, so Cr depression zone are easily formed at the intergranular and there is an extremely great possibility of sensitization.

Further, PLT 2 prescribes the ingredients of ferritic stainless steel to enable determination of a composition of ingredients of Dissimilar weld metal between ferritic S.S. and Austinitic S.S., but the actual composition of ingredients of a weld metal zone greatly changes depending on the volume ratio of the materials which are welded or the ratio of mixture of materials at the time of solidification of the weld metal zone. For this reason, it is difficult to control the structure by just the ingredients of one of the materials. Furthermore, PLT 2 shows to add a large amount of expensive Ni to a high purity ferrite system. Ni and, further, Si, Nb, and Cu are elements which promote solution strengthening, so the material rises too much in strength or hardness and the workability deteriorates.

PLT 3 prescribes a level of concentration of Ca in a general range if a usual high purity ferritic stainless steel. Furthermore, the formation of CaS, which is considered a problem in corrosion resistance in the literature, is greatly affected by the production conditions of the steel sheet and other added ingredients, so is not determined by just the Ca concentration. PLT 4 and PLT 5 disclose a welded structure, obtained by welding, while omitting an Ar gas shield at an anti-torch side, together ferritic stainless steel sheets by TIG welding.

Citations List

Patent Literature

PLT 1: Japanese Patent Publication No. 2009-185382A
PLT 2: Japanese Patent Publication No. 2010-202916A
PLT 3: Japanese Patent Publication No. 2011-202254A
PLT 4: Japanese Patent Publication No. 11-323502A
PLT 5: Japanese Patent Publication No. 2009 161836A

Summary of Invention

Technical Problem

The present invention has as its problem the provision of ferritic stainless steel which can suppress a drop in corrosion resistance of a weld zone even if omitting an Ar gas shield in TIG welding. Furthermore, it has as its problem the provision of a welded structure of ferritic stainless steel which has an excellent corrosion resistance and is excellent in strength of the weld zone as well even in an environment with more severe crevice corrosion etc.

Solution to Problem

The inventors engaged in in-depth research for solving the above problem and as a result obtained the following findings:

(1) They found that when omitting the Ar gas shield at the back surface at the time of TIG welding, parts strong in corrosion susceptibility are formed within 1 mm from the weld metal zone at the TIG weld back surface part (in steel sheets to be welded, side opposite to side facing weld torch). In conventional TIG welding using an Ar gas shield, parts strong in corrosion susceptibility are formed at the HAZ separated from the weld metal zone by about several mm. Further, they discovered that to improve the corrosion resistance at a portion within 1 mm from this weld metal zone, it is important to make the formed weld scale composition mainly Cr- and Fe-based oxides and prevent inclusion of Ti, Al, and Si oxides. For this reason, they learned that it is necessary to control the material composition as in the following (formula (1)):

$$(Si+2.5Al+3Ti) \leq 1.50... \quad (formula\ (1))$$

wherein the symbols of the elements in the formula mean the mass% of content of those elements.

(2) Under a severe corrosive environment, crevice corrosion sometimes ends up occurring at the TIG weld zone when omitting the Ar gas shield if just satisfying formula (1). The inventors found that to suppress crevice corrosion under these conditions, it is important to reduce the ratio between the width Wb (of the back bead) and the sheet thickness "t" to 1.5 or less (that is, so that the bead width which is exposed at the back surface is 3 times or less of the sheet thickness "t") in the part of the weld metal zone which is exposed at the back surface, that is, the so-called bead exposed at the back surface. The reason is believed to be as follows: That is, by narrowing the back bead, it is possible to reduce the amount of input heat at the time of welding. Due to this, it is possible to suppress oxidation in the crevice. Even if omitting the shield gas, it is possible to eliminate the parts high in corrosion susceptibility or possible to keep the parts high in corrosion susceptibility inside the parts resistant to corrosion in the crevice.

$$0 < Wb/2t \leq 1.50 \ldots \text{ (formula (2))}$$

(wherein t: sheet thickness of welded metal, Wb: length of bead width exposed at back surface)

(3) Furthermore, they discovered that in this structure, when a higher durability welded structure is demanded, due to the improvement in the weld zone strength, addition of Nb and V according to the following (formula 3) is effective:

$$(Nb \times V) \geq 0.01 \ldots \text{ (formula 3)}$$

wherein the symbols of the elements in the formula mean the mass% of content of those elements. The present invention was made based on these findings. The invention is defined in the claim.

Advantageous Effects of Invention

According to the present invention, it is possible to provide ferritic stainless steel which is excellent in the corrosion resistance of a weld zone even if omitting an Ar gas shield. Further, it is possible to provide a welded structure which is excellent in the crevice corrosion and the strength resistance of the weld zone.

Brief Description of Drawings

[FIG. 1] A view which shows the relationship between the left side of formula (1) and the crevice corrosion depth in the case of omission of an Ar gas shield in a general corrosive environment.

[FIG. 2] FIG. 2(a) is a schematic view of a TIG weld crevice structure used in the present invention, while FIG. 2(b) is an enlarged view of a weld zone of FIG. 2(a). In the present application, when simply referring to "FIG. 2", both FIG. 2(a) and FIG. 2(b) are shown.

[FIG. 3] A view which shows the relationship between formula (2) and the crevice corrosion depth in the case of omission of an Ar gas shield in a severe corrosive environment.

[FIG. 4] A view which shows the relationship between formula 3 and the weld zone hardness.

[FIG. 5] A view which shows examples of an embodiment of the present invention, where FIG. 5(a) shows an example of a lap fillet TIG weld and FIG. 5(b) shows an example of a fillet TIG weld.

Description of Embodiments

Below, the present invention will be explained in detail. Unless particularly designated, the % of the contents of elements means the "mass%".

The inventors engaged in various studies on the corrosion resistance of the TIG weld zone of ferritic stainless steel for the possibility of providing ferritic stainless steel excellent in corrosion resistance even if omitting an Ar gas shield and as a result obtained the following findings.

(1) The inventors found that, when omitting the shield at the time of TIG welding, the parts with a strong corrosion susceptibility at the back surface of a TIG weld are not at the HAZ formed at a location several mm or so from the weld metal zone known at the time of using a conventional Ar gas shield, but change to a portion within 1 mm from the weld metal zone. To improve the corrosion resistance at this portion within 1 mm from the weld metal zone, they discovered that it is important to make the composition of the weld scale which is formed mainly Cr- and Fe-based oxides and prevent contamination by Ti, Al, and Si oxides. For this reason, it is necessary to control the material composition to the following formula (1). Note that in the case of a structure which has a crevice, if a later explained usual corrosive environment (for example, environment corresponding to $Cu^{2+}=2$ ppm in later explained corrosion test), it is possible to suppress the crevice corrosion even if omitting the Ar gas shield if satisfying the formula (1):

$$(Si + 2.5Al + 3Ti) \leq 1.50 \ldots \text{ (1)}$$

wherein the symbols of the elements in the formula mean the mass% of content of those elements.

(2) When exposed to a more severe corrosive environment (for example, in the later explained corrosion test, an environment corresponding to $Cu^{2+}$=20 ppm), in a TIG weld zone omitting the Ar gas shield, sometimes crevice corrosion ends up occurring by just satisfying formula (1). To suppress this crevice corrosion under this condition, the inventors found that it is important to narrow the part of the weld metal zone exposed at the back surface, that is, the so-called "back bead", in width to a certain value or less:

$$0 < Wb/2t \leq 1.50 \ldots \quad (2)$$

(t: sheet thickness of welded metal, Wb: length of bead width exposed at back surface)

(3) Furthermore, in this structure, when a welded structure with a higher durability is demanded, it is effective to add Nb and V in accordance with the following formula (3) to improve the weld zone strength:

$$(Nb \times V) \geq 0.01 \ldots (3)$$

wherein the symbols of the elements in the formula mean the mass% of content of those elements.

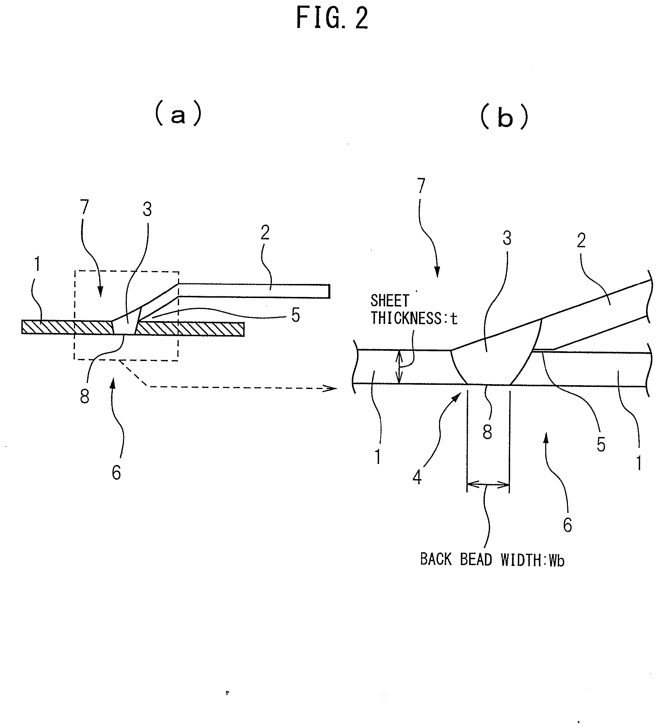

To obtain this finding, as shown in FIG. 2(a), one steel sheet 2 among two steel sheets 2 was brought into contact with the surface of the other steel sheet 1 at an incline (meaning neither vertical nor horizontal) and the contact parts were welded by fillet TIG welding to produce a test material. Note that, the TIG weld of the steel sheets crossed at an incline in this way will be called an "inclined fillet TIG weld" in this application.

Further, in the TIG welded structure which is shown in FIG. 2(a), the torch of the TIG welding is applied from the upper side of the steel sheet 1 and welds the sheet with the other steel sheet 2. At this time, the weld torch side of the steel sheets is called the "front side" and the side opposite to the weld torch is called the "back side". That is, the back side ("anti-torch side") corresponds to the bottom side of the steel sheet 1 in FIG. 2 and the space surrounded by the top surface of the steel sheet 1 and the bottom surface of the steel sheet 2. Among these portions at the anti-torch side, the corrosion resistance becomes a problem near the back bead part 8 in FIG. 2(b) and the weld crevice 5. For this reason, in the present invention, the corrosion resistance is evaluated near the above-mentioned back bead 8 and weld crevice 5. Among these, the part near the back bead 8 is described as the "back surface weld zone 4".

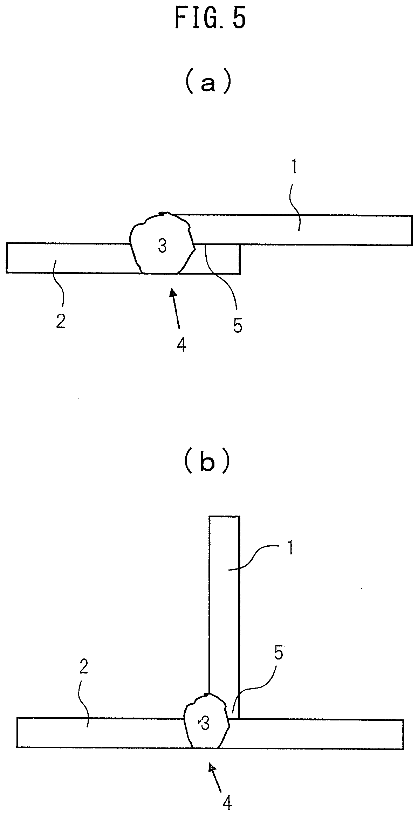

Note that, the present invention is explained with reference to the inclined fillet TIG weld which is shown in FIG. 2(a), but the invention does not have to be limited to this. For example, the same effect is obtained in the lap fillet TIG weld which is shown in FIG. 5(a) and in the fillet TIG weld which is shown in FIG. 5(b). Of course, even if outside of these modes, if having the technical feature of the present invention, the effect of the present invention can be obtained. In the present application, the inclined fillet welded joint shown in FIG. 2 will be explained as an example.

[Production of Test Materials]

The ferritic stainless steel sheet used as the test materials was produced as follows: Ferritic stainless steels melted in a laboratory vacuum melting furnace, based on Cr: 16.0 to 25.0% and Mo: 0.30 to 3.00% and changed in Al, Ti, Si, Nb, and V in various ways, were rolled and heat treated to produce cold rolled sheets. The elements of the test materials are shown in Table 1 (Table 1 is shown split into six parts. Below, Table 1-1 to Table 1-6 will together be referred to as Table 1.)

Each test material had a sheet thickness of 0.8 mm. The test material was wet polished at its surface by #600 emery paper, then was cut into 40 mm width × 200L mm and 55 mm width × 200L mm pieces to prepare a Test Piece 1 and Test Piece 2. To give the opening angle of the crevice, the Test Piece 2 was bent at 15 mm from one end of a short side (width 55 mm) to 15° from the horizontal. As shown in FIG. 2, the steel sheet 2 (bent Test Piece 2) was combined with the steel sheet 1 (Test Piece 1) and the end of the bent material was welded by TIG welding.

[Welding Conditions]

The welding conditions were made a feed rate of 50 cm/min, a current value of a constant 70A, and exposure of the bead at the back surface. The back bead width was about 1.2 mm. For the gas shield of the weld zone, Ar gas was used. The gas shield of the torch side 7 was applied at a flow rate of 15L (liters, same below)/min. The after gas was fixed to 20L/min. For the anti-torch side 6, the welding was performed under the two conditions of a gas shield and no gas shield. When applying a gas shield, the gas shield was applied to both the weld crevice 5 and the back surface weld zone 4 near the back bead 8 by a flow rate of 5L/min. When stopping the gas shield, the flow rate was zero.

[Corrosion Resistance Evaluation Test (Part 1)]

A corrosion resistance evaluation test piece was cut from the present material to a weld metal length of 20 mm and a length of 40 mm in size. The cut end faces were wet polished by #600 emery paper. To expose only the anti-torch side 6 to a test environment, the weld metal zone 3 of the torch side 7 was coated by a heat resistant silicone resin. As the test solution, in addition to NaCl, an oxidizing agent comprised of a $CuCl_2$ reagent was used. A test solution adjusted to give a $Cl^-$ of 600 ppm and a $Cu^{2+}$ of 2 ppm-$Cu^{2+}$ was used. Note that $Cu^{2+}$ was added to adjust the oxidizing property of the environment. The concentration of 2 ppm is a concentration simulating a general hot water environment. The immersion conditions were made 80°C, blowing of oxygen, and continuous immersion for 2 weeks. Note that the test solution was replaced very week.

The pitting at the back surface weld zone 4 after the test and the crevice corrosion depth of the weld crevice part 5 were measured by using the focal depth method. The corrosion in the crevice was measured by shaving off the weld metal zone 3 and separating the steel sheet 1 and the steel sheet 2. The crevice depth shows the maximum value of the pitting depth due to corrosion.

The front surface film of the weld zone was analyzed at its surface using a JEOL AES at an observed power of 5000X to analyze the surface elements.

[Results of Evaluation]

(Crevice)

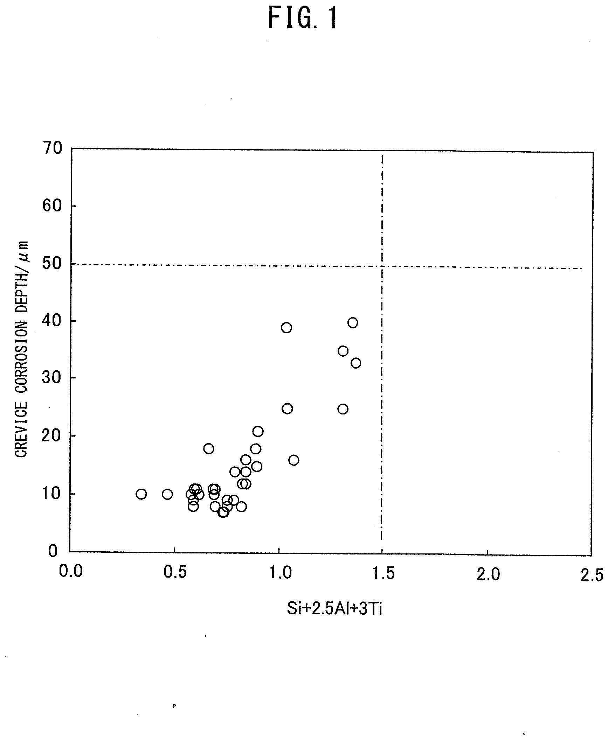

When applying an Ar gas shield, when Si+2.5Al+3Ti was high, partial corrosion was seen, but the depth never exceeded the critical depth (corrosion depth where any further deepening of the corrosion would lead to growth of corrosion to formation of through holes) of 50 $\mu$m. On the other hand, the relationship between the crevice corrosion depth after a corrosion test at a weld crevice omitting an Ar gas shield and Si+2.5Al+3Ti is shown in FIG. 1. As shown in FIG. 1, when omitting the Ar gas shield, it was confirmed that the corrosion depth becomes 50 $\mu$m or less if the value of Si+2.5Al+3Ti is 1.50 or less.

Further, the position of the corrosion when applying an Ar gas shield becomes the matrix HAZ 5 to 10 mm away from the boundary between the weld metal and the welded metals (in this case, the steel sheets) (also called the "fusion line". Below, simply called the "boundary of the weld metal"). However, different from this, the position of the corrosion when omitting the shield became within 1 mm from the boundary of the weld metal.

(Back Surface Weld Zone)

When applying an Ar gas shield, when Si+2.5Al+3Ti was high, partial corrosion was seen, but the depth never exceeded the critical depth of 20 $\mu$m. Note that the position of occurrence of pitting at the back surface weld zone was observed to be a part 2 to 3 mm from the boundary of the back surface weld metal, the so-called HAZ. On the other hand, when omitting the Ar gas shield, if the value of Si+2.5Al+3Ti exceeded 1.50, corrosion occurred exceeding a corrosion depth of 20 $\mu$m. The position of corrosion at the time of omission of an Ar gas shield differs from the case of application of an Ar gas shield and occurs at the weld metal boundary part and within 1 mm from the boundary.

As generally known, the corrosion resistance of ferritic stainless steel in such a corrosive environment is better the higher the amounts of addition of Cr and Mo. However, when omitting an Ar gas shield, the surfaces of the weld bead and HAZ are formed not with a passivation film having a self repair function, but with a Cr and Fe oxide film, Cr depression zone are formed right underneath the film due to the formation of such an oxide film, and, furthermore, this oxide film itself corrodes whereby the base material is corroded etc. For this reason, the corrosion resistance is believed to fall more than the extent predicted from the added amounts of Cr and Mo.

The inventors engaged in an in-depth survey of the causes of easy corrosion of the HAZ near the weld metal boundaries when omitting the Ar gas shield. They analyzed the film within 1 mm from the back bead suffering from corrosion by AES surface analysis and as a result confirmed that O is high even at parts where Ti, Al, and Si precipitate in spots in addition to Fe, Cr, and O at the surface of the film in the case of omission of a shield. It was learned that this became more remarkable the higher the concentrations of Ti, Al, and Si in the material.

From this, it is guessed that when a material with high concentrations of Ti, Al, and Si is exposed to a corrosive environment by welding while omitting an Ar gas shield, the presence of oxides of Ti, Al, and Si in the surface film may disturb the uniformity of distribution of Cr oxides in the surface protective oxide film. That is, it is guessed that since the uniformity of distribution of Cr oxides in the surface protective oxide film is disturbed and the ratio of Cr oxides locally falls at the parts with scattered oxides of Al, Ti, etc., the corrosion resistance falls more than predicted by the concentration of Cr added.

The fact that corrosion is suppressed if Si+2.5Al+3Ti is 1.50 or less at the crevice, which has been considered inferior in corrosion resistance in the past, even if omitting the Ar gas shield is believed to be because the uniformity of the surface film has been improved and, further, because, as explained above, the omission of the Ar gas shield causes the parts high in corrosion susceptibility to move to the inside from the crevice, so those parts are less exposed to a corrosive environment.

Due to these, it is clear that to improve the corrosion resistance of the TIG weld zone of ferritic stainless steel at the time of omission of the Ar gas shield, it is necessary to control not only Cr and Mo, but also Si, Al, and Ti to the formula (1).

$$(Si+2.5Al+3Ti) \leq 1.50... \quad (1)$$

* Symbols in formula indicate contents [mass%] of elements in steel.

From the viewpoint of corrosion, the smaller the value of Si+2.5Al+3Ti the better. Preferably, it may be made 1.0 or less, more preferably 0.8 or less. Note that, while explained in detail on the section on the effects of the different elements, Si, Al, and Ti are important as oxidizing elements at the time of refining. For this reason, if excessively reducing any of these, production of high purity ferritic stainless steel becomes difficult and the manufacturing costs become remarkably higher. For this reason, these elements have lower limit values. In the above formula Si+2.5Al+3Ti, the values derived from the lower limit values of the contents of the different elements are made the lower limits. Further, rather than these elements alone, from the viewpoint of the overall manufacturability, preferably the lower limit of Si+2.5Al+3Ti is made 0.30. Considering a margin of safety in production, more preferably the lower limit value is made 0.45.

Further, as explained above, in the case of a general corrosive environment, if the above (formula (1)) is satisfied, the corrosion resistance of the weld zone is improved not only at the back surface weld zone 4, but also the weld crevice 5 of a crevice structure.

[Corrosion Resistance Evaluation Test (Part 2)]

Next, the corrosion resistance was evaluated under a corrosive environment more severe than the conditions used in the "Corrosion Resistance Evaluation Test (Part 1)". For the test material, the No. 5 steel sheet of Table 1 was used. This is a system of elements which satisfies formula (1). This test material was used in the same way as described in the above-mentioned "Production of Test Material", "Welding Conditions" to prepare a crevice welded sample by TIG welding.

In the welding, no Ar gas shield was applied at the anti-torch side (weld crevice part 5 and back surface weld zone 4). The weld current value was changed between 50A to 120A for the purpose of controlling the back bead width of the weld zone. The state of the back bead at this time, if expressed by the indicator Wb/2t shown by the back bead width Wb and sheet thickness "t" shown in FIG. 2, was 0.13 to 1.88 (back bead width 0.2 to 3.0 mm). Note that the back bead is not uniform in width over the entire length, so the width was measured along the bead in the longitudinal direction at five points or more and the average value was made the value of Wb. Further, when the value of the welding current is small, sometimes the back bead does not extend over the entire length. The Wb in this case was made zero.

The test piece for evaluation of the corrosion resistance was produced under the same conditions as the above-mentioned "Production of Test Material", "Welding Conditions". The corrosion test solution was made a composition of the above-mentioned 600 ppm-Cl⁻ + 20 ppm-Cu²⁺, that is, raising only the $Cu^{2+}$, to simulate a severely corrosive environment. The rest of the test conditions and method of evaluation were as in the above-mentioned "Corrosion Resistance Evaluation Test (Part 1)".

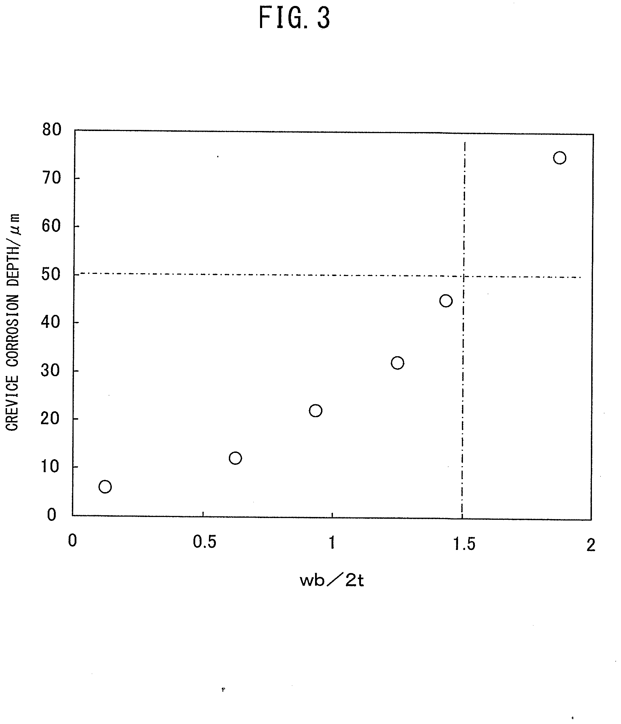

The results of the crevice corrosion depth are shown in FIG. 3. The pitting depth of the back surface weld zone follows a similar trend as the crevice corrosion depth, so the results at a crevice with more severe corrosion were illustrated.

At this time, if the value of Wb/2t determined from the width Wb of the back bead and the sheet thickness "t" exceeds 1.50, the crevice corrosion depth exceeds the critical depth of 50 $\mu$m and clear crevice corrosion occurs. If the value of Wb/2t becomes 1.50 or less, the crevice corrosion depth becomes shallower than 50 $\mu$m in the results.

Note that, regarding this weld crevice shape, in the above test, the crevice angle was made 15°, but this angle is not important and is not particularly limited.

The reason why the crevice corrosion depth with the gas shield omitted becomes deeper if the value of Wb/2t becomes larger is believed to be that by omitting the Ar gas shield, the portions which become higher in corrosion susceptibility change from the HAZ separated from the crevice to a position at a close distance from the weld metal zone and that a large Wb/2t means a large amount of input heat at the time of welding, so welding in the crevice causes increased formation of an oxide film and has the action of aggravating the unevenness of the Cr surface protective oxide film.

Further, when omitting an Ar gas shield, compared with when using an Ar gas shield, the back bead width tends to become larger. This is because the cooling effect due to the gas is eliminated, so even with the same amount of input heat, the amount of melting of metal increases. Furthermore, in the present invention, to reduce the Al, Ti, and Si, which lower the penetration of the welding, this tendency becomes larger. For this reason, to control the back bead width in TIG welding in the material of the present invention, it is necessary to reduce the amount of weld input heat more than when there is a gas shield.

Due to this, it was clarified that to improve the corrosion resistance of the TIG weld zone, it is important to control the width of the back bead of the weld zone to become narrower.

Note that, as shown by the results of the above 2 ppm-$Cu^{2+}$ conditions, under an environment corresponding to general hot water, with the ferritic stainless steel according to the present invention, even if omitting the Ar gas shield, it is possible to suppress crevice corrosion without regard to the width of the back bead. Overseas, a stricter corrosive environment of conditions of 20 ppm-$Cu^{2+}$ is also envisioned. If envisioning application to such a severe corrosive environment, when welding omitting an Ar gas shield is required, control to the left side of formula (2), Wb/2t, of over 0 to 1.50 is necessary.

The value of Wb/2t is more preferably 1.40 or less. More preferably it may be made 1.25 or less. Further, as shown in FIG. 3, if the value of Wb/2t becomes 1.00 or less, the crevice corrosion depth becomes constant at substantially 20 $\mu$m. Most preferably, it may be made 1.00 or less.

From the above finding, it was clarified that to improve the corrosion resistance of the TIG weld zone even if omitting the Ar gas shield at the time of TIG welding, it is necessary to control the value of Si+2.5Al+3Ti of the ferritic stainless steel. Further, in addition to the above, it was clarified that by controlling the weld back bead width Wb, excellent corrosion resistance is exhibited even in a more severe corrosive environment.

[Improvement of Strength of Weld Metal Zone]

To answer the demand for higher pressure supply of hot water from hot water heaters in recent years, it is necessary to improve the strength of the weld zone so as to raise the strength of the hot water tank. In the present invention, giving priority to the corrosion resistance and narrowing the weld back bead width tends to lower the strength of the weld zone. To improve this, the inventors studied the improvement of strength of the weld metal zone.

For the test materials, the various steels of the later explained Table 1 were used. The welding conditions were made the same as those shown in the above-mentioned "Corrosion Resistance Evaluation Test (Part 2)". To observe the weld zone, each material was cut out to the cross-sectional shape such as shown in FIG. 2(a), was buried in a resin, then was polished to a mirror surface to prepare a sample for observation of the cross-section. For the strength of the weld zone, the sample for observation of the cross-section was used to measure the hardness at the center part of the weld metal zone by a Vicker's hardness meter at five points under conditions of 0.5 kgf and the average value of the Vicker's hardness Hv was found. To obtain sufficient strength even in the weaker welded structure in the present invention explained later (Wb/2t≈0, that is, state where no weld bead appears at back surface), it is preferable that Hv be 180 or more. Note that when it was not possible to measure five points due to the area of the weld metal zone, the average value was taken of the measurable number.

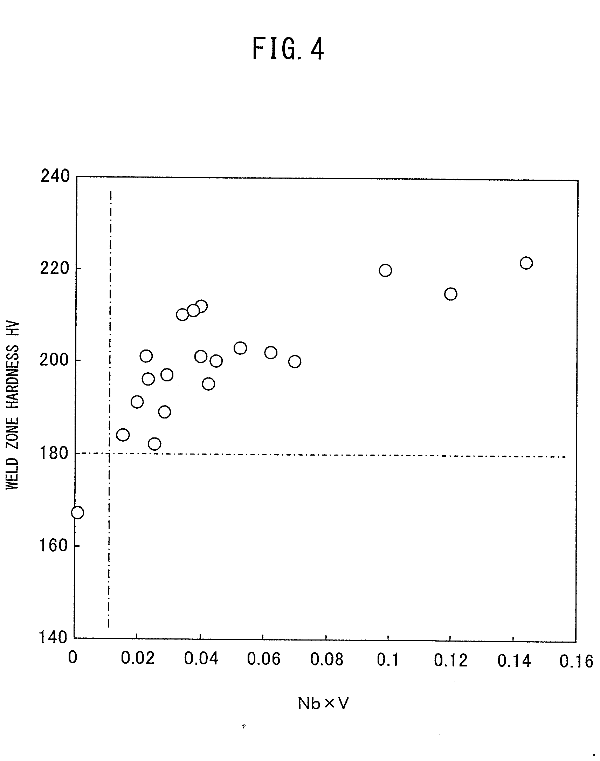

To improve the strength of the weld metal zone, it was discovered that not only the generally known addition of Ti, but also the copresence of Nb and V is effective. The relationship between the hardness of the weld metal zone and the product of Nb and V is shown in FIG. 4. From this, when Nb×V is 0.01 or more, the hardness of the weld metal zone is improved. From these viewpoints, it was clarified that making the Nb×V 0.01 or more guarantees the strength and suppression of sensitization. Further, while explained later, when omitting the shield in TIG welding, V partially forms oxides of V when the weld zone is contaminated by oxygen, so also has the effect of suppression of sensitization. Due to the above reasons, it was clarified that the synergistic effect of Nb and V enables the strength of the weld zone to be improved.

As the mechanisms for improvement of the strength of materials, refinement of the structure, solution strengthening by fine amounts of elements, precipitation hardning by precipitates, etc. may be mentioned. In the case of high purity ferritic stainless steel, the crystal grains of the weld metal zone easily coarsen, but if adding Nb, its carbonitrides result in crystal grain refinement and precipitation hardning. Further, Nb has a large effect as a solution strengthening element as well. In the present invention, by adding Nb and V together, the strength is strikingly improved. The reason is believed to be that the precipitates of V differ in size from the precipitates of Nb and thereby synergistically improve the strength. Therefore, the product of the contents of Nb and V was used as an indicator to clearly show the effect of addition of Nb and V.

The value of formula 3: Nb×V is preferably 0.01 or more. More preferably, 0.02 or more is added. More preferably, the value is 0.03 or more, while most preferably it is 0.04 or more. However, excessive addition causes a drop in workability, so the value is made 0.5 or less.

As explained above, it is clarified that even if omitting the Ar gas shield at the time of TIG welding of ferritic stainless steel, control of Si, Al, and Ti enables a drop in corrosion resistance of the weld zone to be suppressed, that making the TIG weld back bead width the structure proposed by the present invention results in an excellent corrosion resistance even in a more severe corrosive environment, and furthermore that control of Nb and V enables the drop in strength at the time of TIG welding at the time of the above structure to be suppressed.

Next, the composition of elements of the ferritic stainless steel of the present invention will be explained in detail.

Al, as explained above, is important as a deoxidizing element. Further, it has the effect of controlling the composition of non-metallic inclusions to refine the structure. However, if the content of Al is less than 0.005%, formation of a uniform oxide film of the weld zone is obstructed. Further, excessive addition of over 0.150% of Al invites coarsening of non-metallic inclusions at the time of metal refining and is liable to form starting points of defects at the products. For this reason, the lower limit value of the Al content was made 0.005% or more and the upper limit value was made 0.150% or less. More preferably, the lower limit is 0.007%, while the upper limit is 0.100%. Still more preferably, the lower limit may be made 0.010%, while the upper limit may be made 0.050%.

Ti is an extremely important element which immobilizes C and N, suppresses the intergranular corrosion of the weld zone, and improves the workability. This effect is not obtained if the content of Ti is less than 0.05%. On the other hand, if Ti is included in more than 0.30%, in the same way as Al, the formation of a uniform oxide film at the weld zone is impeded and surface defects are caused at the time of manufacture. For this reason, the lower limit of the Ti content was made 0.05%, while the upper limit was made 0.30%. More preferably, the lower limit is 0.06%, while the upper limit is 0.25%. Furthermore, preferably, the lower limit may be made 0.07%, while the upper limit may be made 0.20%.

Si is also an element important as a deoxidizing element and is effective for improvement of the corrosion resistance and oxidation resistance. This effect is not obtained if the content of Si is less than 0.05%. On the other hand, if including Si in over 0.30%, in the same way as Ti or Al, formation of a uniform oxide film in the weld zone is obstructed. Excessive addition lowers the workability and the manufacturability. For this reason, the upper limit value of the content of Si was made 0.30%. Note that, Si is an essential element for deoxidation as explained above, so the lower limit value was made 0.05%. In the Si content, more preferably the lower limit is 0.06%, while the upper limit is 0.25%. Furthermore, preferably, the lower limit may be made 0.07%, while the upper limit may be made 0.20%.

Nb is added complexly with Ti as a stabilizing element of C and N and thereby suppresses intergranular corrosion of the weld zone to improve the workability. (Ti+Nb)/(C+N)≥6 (wherein, Ti, Nb, C, and N are the contents of the elements in the steel [mass%]) is preferably satisfied. Further, Nb can improve the strength of the weld zone by complex addition with V. This effect is only obtained if the Nb content is less than 0.10%. On the other hand, if including Nb in over 0.50%, excessive addition results and the problems sometimes arise of the strength being excessively improved and the workability being lowered. Further, there is the problem of a rise in costs. To lower the workability, in the content of Nb, the lower limit is made 0.10, while the upper limit is made 0.50%. Preferably, the lower limit is 0.12%, while the upper limit is 0.45%. Furthermore, preferably, the lower limit may be made 0.15%, while the upper limit may be made 0.36%.

Next, the other elements which form the ferritic stainless steel of the present invention will be explained.

C causes the intergranular corrosion resistance and workability to fall, so the content has to be reduced. For this reason, the upper limit value of the content of C is made 0.020% or less. However, if excessively reducing the content of C, the refining costs deteriorate, so the lower limit is made 0.002%. Preferably, the lower limit may be made 0.005%, while the upper limit may be made 0.015%. More preferably, the lower limit may be made 0.008%, while the upper limit may be made 0.013%.

N, like C, reduces the intergranular corrosion resistance and workability, so the content must be reduced as much as possible. For this reason, the content of N was limited to 0.025% or less. However, if excessively reducing the content of N, the refining costs deteriorate, so in practice the content may be made 0.002% or more. The upper limit value of N preferably may be made 0.015%, more preferably may be made 0.010%. The lower limit value of N, from the viewpoint of the refining costs, preferably may be made 0.003%, more preferably may be made 0.005%.

Mn is an element which is important as a deoxidizing element. This effect is not obtained unless 0.01% or more is added. On the other hand, if excessively adding over 0.50%, MnS, which forms the starting point of corrosion, is easily formed. Further, the ferrite structure is destabilized. For this reason, the content of Mn was made 0.01% to 0.50% or less. More preferably, the lower limit may be made 0.05%, while the upper limit may be made less than 0.40%. More preferably, the lower limit may be made 0.08%, while the upper limit may be made less than 0.33%. From the viewpoint of suppression of formation of MnS, it is more reliable to make the upper limit 0.30% or less.

P is an unavoidable impurity. It not only reduces the weldability and workability, but also facilitates intergranular corrosion, so has to be kept low. For this reason, the content of P was limited to 0.035% or less. More preferably, it is 0.001% to 0.020%.

S is also an unavoidable impurity, but forms CaS, MnS, or other water-soluble inclusions which form starting points of corrosion, so has to be reduced. For this reason, the content of S was limited to 0.0100% or less. 0.0050% or less is more desirable. However, excessive reduction invites deterioration of the costs. For this reason, the content of S is desirably 0.0001% or more.

Cr is the most important element in securing the corrosion resistance of stainless steel and, furthermore, has the effect of stabilizing the ferrite structure. Further, the present invention is characterized by controlling the Al, Si, and Ti so as to give the required corrosion resistance even if not adding excessive Cr when eliminating the Ar gas shield at the time of welding. To obtain these effects, the Cr content has to be 16.0% or more. For this reason, the Cr content in the present invention is made 16.0% or more. However, excessive addition causes the workability and the manufacturability to fall and causes the material costs to rise, so the upper limit is made 25.0% or less. Regarding the content of Cr, preferably the lower limit may be made 17.0%, while he upper limit may be made 24.0%. More preferably, the lower limit may be made 18.0%, while the upper limit may be made 23.0%.

Mo has an effect of repairing a passivation film and is an element which is extremely effective for improving the corrosion resistance. Further, Mo has the effect of improving the pitting resistance by inclusion along with Cr. Further, Mo has the property of repassivation and the effect of suppressing the dissolution rate at the time of corrosion by inclusion along with Ni. However, if increasing the Mo, the workability remarkably falls and the cost rises. For this reason, preferably the upper limit of the content of Mo is made 3.00% or less. Further, to include Mo to improve the above characteristics, Mo is preferably included in 0.30% or more. For the content of Mo, preferably, the lower limit may be made 0.50%, while the upper limit may be made 2.50%. More preferably, the lower limit may be made 0.90%, while the upper limit may be made 2.00%.

Cu not only generally lowers the active dissolution rate, but also has the effect of promoting repassivation, so may be added in 0.10% or more in accordance with need. However, in a warm water environment, Cu is not only believed not to have an effective effect of suppression of corrosion, but depending on the corrosive environment, Cu sometimes promotes corrosion. For this reason, the upper limit of Cu was made 0.50% or less. Preferably, the lower limit may be made 0.12%, while the upper limit may be made 0.20%. More preferably, the lower limit may be made 0.13%, while the upper limit may be made 0.18%.

Ni has the effect of suppressing the active dissolution rate. Further, it is small in the hydrogen overpotential, so is excellent in repassivation characteristics, so can be added according to need. To improve the above characteristics, Ni is preferably included in 0.05% or more. However, excessive addition of Ni causes the workability to fall and destabilizes the ferrite structure. Further, Ni is desirably as small in amount as possible since the price of the material jumps up and down. For this reason, the content of Ni may be made 0.05% to 2.00%. More preferably, the lower limit may be made 0.10%, while the upper limit may be made 1.50%. Furthermore, preferably, the lower limit may be made 0.20%, while the upper limit may be made 1.20%.

V not only has an effect due to composite addition with the above-mentioned Nb, but also has the action of improving the atmospheric corrosion resistance and the crevice corrosion resistance. However, excessive addition of V causes the workability to fall. Further, the effect of improvement of the corrosion resistance also becomes saturated. To obtain these effects, the amount of addition is preferably made 0.05 to 1.00%. More preferably, the lower limit may be made 0.10%, while the upper limit may be made 0.70%. Furthermore, preferably, the lower limit may be made 0.20%, while the upper limit may be made 0.60%.

Sn and Sb not only improve the crevice corrosion resistance, but also have the effect of suppressing the dissolution rate at the time of corrosion, so one or both can be added in accordance with need. However, excessive addition causes the workability to fall. The effect of improvement of the corrosion resistance also becomes saturated. To obtain these effects, the contents are preferably respectively made 0.05 to 1.00%. More preferably, the lower limit may be made 0.08%, while the upper limit may be made 0.70%. Furthermore, preferably, the lower limit may be made 0.10%, while the upper limit may be made 0.50%.

Zr, like V, not only improves the crevice corrosion resistance, but also has the effect of a stabilizing element of C and N, so is added in accordance with need. However, excessive addition of Zr causes the workability to fall. Further, the effect of improvement of the corrosion resistance also becomes saturated. Therefore, when including Zr, the upper limit of the content is preferably made 0.20% or less. Further, by including Zr, to improve the above characteristics, Zr is preferably included in 0.03% or more. More preferably, the lower limit may be made 0.05%, while the upper limit may be made 0.10%. Furthermore, preferably, the lower limit may be made 0.06%, while the upper limit may be made 0.09%.

B is an intergranular strengthening element which is effective for improvement of the secondary work embrittlement, so is added in accordance with need. However, excessive addition strengthens the ferrite by solution strengthening and becomes a cause of a drop in ductility. To obtain these effects, when adding B, preferably the lower limit is made 0.0001% or less, while the upper limit is made 0.0050% or less. More preferably, the lower limit may be made 0.0002%, while the upper limit may be made 0.0020%. Furthermore, preferably, the lower limit may be made 0.0003%, while the upper limit may be made 0.0010%.

Note that, the technical features of the present invention lie in the elemental composition of the ferritic stainless steel used and the structure of the weld zone. For this reason, in this Description, a hot water tank was given as an example, but the invention is not limited to this. The invention is applied to all ferritic stainless steel which has been TIG welded. Further, the welded metal is not particularly limited in sheet thickness "t" either. There is no problem if in the practical range of 0.1 to 10 mm. The thickness may be suitably determined in the range of 0.4 to 3 mm of the generally used thin sheet material.

Examples

To evaluate the corrosion resistance of the TIG weld crevice part, the TIG weld test material having the crevice structure shown in FIG. 2 was used for evaluate the corrosion resistance.

For the test materials, test pieces comprised of ferritic stainless steels which have the chemical elements (compositions) shown in Table 1 were used. Sheets of sheet thicknesses of 0.8 mm were produced by the method shown in the above-mentioned "Production of Test Materials". Two were combined to prepare a TIG weld test piece to give a crevice angle of 15°. The welding conditions included no Ar gas shield at only the anti-torch side (weld crevice part and back surface weld zone). The weld current was changed in value from 50A to 120A for the purpose of control of the back bead width of the weld zone.

The method of evaluation of the corrosion resistance was evaluation by the method shown in the above-mentioned "Corrosion Resistance Evaluation Test (Part 2)". That is, the test solutions were made two compositions of 600 ppm-$Cl^-$ and 2 ppm-$Cu^{2+}$ and of 600 ppm-$Cl^-$ and 20 ppm-$Cu^{2+}$. The test material was continuously immersed in them at 80°C for 2 weeks while blowing in oxygen. As explained above, 2 ppm-$Cu^{2+}$ simulates a general hot water environment, while 20 ppm-$Cu^{2+}$ simulates a severe environment. The crevice corrosion depth was measured using the focal depth method. Note that the crevice structural material was measured for corrosion in the crevice by shaving off the weld metal zone and opening the crevice.

The extent of exposure of the weld metal zone was evaluated by burying a cross-section of the weld metal zone in a resin and observing its structure. Specifically, the cross-sectional structure was observed as shown in FIG. 2, the sheet thickness "t" of the welded metal and the back bead width Wb were measured, and the results were entered into the formula (2): Wb/2t for evaluation.

Table 1-1

| | elements | | | | | | | | | | | | | | | | | |
|---|---|---|---|---|---|---|---|---|---|---|---|---|---|---|---|---|---|---|
| | c | N | Si | Mn | P | S | Cr | Al | Ti | Nb | Mo | Cu | Ni | V | Sn | Sb | B | Zr |
| 1 | 0.013 | 0.011 | 0.26 | 0.25 | 0.020 | 0.0022 | 16.9 | 0.120 | 0.25 | 0.19 | 2.35 | 0.19 | | | | | | |
| 2 | 0.010 | 0.013 | 0.16 | 0.16 | 0.021 | 0.0015 | 19.6 | 0.070 | 0.19 | 0.50 | 1.70 | 0.30 | | 0.08 | | | | |
| 3 | 0.006 | 0.010 | 0.18 | 0.14 | 0.026 | 0.0010 | 18.6 | 0.060 | 0.09 | 0.28 | 2.22 | 0.15 | | | | | | |
| 4 | 0.007 | 0.010 | 0.10 | 0.11 | 0.031 | 0.0061 | 19.8 | 0.050 | 0.20 | 0.17 | 1.56 | | | 0.25 | | | | |
| 5 | 0.011 | 0.012 | 0.13 | 0.12 | 0.024 | 0.0035 | 20.9 | 0.060 | 0.17 | 0.19 | 1.45 | | | | | | | |
| 6 | 0.010 | 0.013 | 0.08 | 0.15 | 0.021 | 0.0032 | 22.1 | 0.050 | 0.13 | 0.40 | 1.22 | | | 0.10 | | | | |
| 7 | 0.009 | 0.009 | 0.19 | 0.16 | 0.020 | 0.0039 | 22.6 | 0.070 | 0.11 | 0.31 | 0.80 | | | 0.17 | | | | |
| 8 | 0.006 | 0.010 | 0.11 | 0.12 | 0.029 | 0.0015 | 19.5 | 0.020 | 0.18 | 0.19 | 1.89 | | | 0.15 | | | | |
| 9 | 0.008 | 0.011 | 0.15 | 0.20 | 0.025 | 0.0010 | 19.9 | 0.080 | 0.09 | 0.48 | 0.95 | | 0.50 | 0.25 | | | | |
| 10 | 0.006 | 0.009 | 0.11 | 0.22 | 0.020 | 0.0025 | 20.3 | 0.090 | 0.17 | 0.16 | 1.05 | | 1.10 | 0.16 | | | | |
| 11 | 0.009 | 0.013 | 0.06 | 0.16 | 0.023 | 0.0033 | 19.3 | 0.020 | 0.12 | 0.18 | 0.95 | | 1.90 | 0.80 | | | | |
| 12 | 0.010 | 0.008 | 0.12 | 0.15 | 0.020 | 0.0015 | 21.0 | 0.100 | 0.11 | 0.32 | 1.31 | 0.41 | | 0.14 | | | 0.0005 | |
| 13 | 0.008 | 0.010 | 0.11 | 0.14 | 0.021 | 0.0038 | 23.3 | 0.070 | 0.15 | 0.29 | 0.35 | | 0.90 | 0.08 | | | 0.0009 | 0.09 |
| 14 | 0.009 | 0.009 | 0.22 | 0.23 | 0.020 | 0.0009 | 20.1 | 0.090 | 0.20 | 0.22 | 1.59 | 0.15 | | 0.07 | | | | |
| 15 | 0.005 | 0.008 | 0.06 | 0.10 | 0.024 | 0.0015 | 19.6 | 0.040 | 0.15 | 0.25 | 1.10 | | | 0.25 | | | | |

Table 1-2

EP 2 692 891 B1

| | elements | | | | | | | | | | | | | | | | | |
|---|---|---|---|---|---|---|---|---|---|---|---|---|---|---|---|---|---|---|
| | C | N | Si | Mn | P | S | Cr | Al | Ti | Nb | Mo | Cu | Ni | V | Sn | Sb | B | Zr |
| 16 | 0.005 | 0.008 | 0.15 | 0.15 | 0.020 | 0.0028 | 22.2 | 0.080 | 0.13 | 0.22 | 0.61 | | 1.20 | 0.09 | | | | |
| 17 | 0.011 | 0.014 | 0.13 | 0.28 | 0.028 | 0.0011 | 19.1 | 0.050 | 0.11 | 0.18 | 0.45 | | | 0.21 | 0.51 | | | |
| 18 | 0.011 | 0.011 | 0.18 | 0.25 | 0.020 | 0.0011 | 22.5 | 0.050 | 0.15 | 0.19 | 0.32 | | | 0.12 | 0.14 | | | |
| 19 | 0.010 | 0.012 | 0.15 | 0.19 | 0.021 | 0.0011 | 19.9 | 0.060 | 0.13 | 0.20 | 1.71 | | | 0.35 | 0.33 | | | |
| 20 | 0.009 | 0.012 | 0.22 | 0.22 | 0.026 | 0.0065 | 22.0 | 0.050 | 0.15 | 0.33 | 0.95 | 0.18 | | 0.30 | | 0.35 | | |
| 21 | 0.010 | 0.010 | 0.11 | 0.12 | 0.020 | 0.0009 | 19.5 | 0.090 | 0.17 | 0.20 | 2.01 | 0.10 | 0.90 | 0.15 | 0.33 | | | |
| 22 | 0.006 | 0.006 | 0.14 | 0.23 | 0.020 | 0.0018 | 20.0 | 0.060 | 0.20 | 0.38 | 1.59 | | 0.60 | 0.09 | 0.25 | 0.31 | | |
| 23 | 0.013 | 0.012 | 0.14 | 0.22 | 0.020 | 0.0036 | 21.2 | 0.300 | 0.25 | 0.21 | 0.01 | 0.32 | | 0.15 | | | | |
| 24 | 0.008 | 0.011 | 0.22 | 0.25 | 0.024 | 0.0045 | 23.6 | 0.160 | 0.30 | 0.31 | 0.35 | 0.54 | | 0.08 | | | | |
| 25 | 0.015 | 0.009 | 0.45 | 0.27 | 0.026 | 0.0022 | 16.5 | 0.250 | 0.25 | 0.01 | 0.50 | | | 0.09 | | | 0.0006 | |
| 26 | 0.007 | 0.011 | 0.53 | 0.21 | 0.020 | 0.0019 | 15.5 | 0.250 | 0.27 | 0.15 | 0.01 | | 0.40 | | | | | |
| 27 | 0.004 | 0.009 | 0.25 | 0.30 | 0.028 | 0.0010 | 17.5 | 0.090 | 0.18 | 0.03 | 0.31 | 0.38 | | | | | | 0.10 |
| 28 | 0.060 | 0.072 | 0.40 | 0.61 | 0.031 | 0.0064 | 16.5 | 0.100 | 0.05 | 0.01 | 0.02 | | | | | | | |
| 29 | 0.007 | 0.012 | 0.20 | 0.30 | 0.030 | 0.0034 | 17.0 | 0.110 | 0.24 | 0.10 | 0.00 | 1.08 | | 0.10 | | | | |
| 30 | 0.004 | 0.010 | 0.12 | 0.25 | 0.032 | 0.0030 | 22.2 | 0.060 | 0.21 | 0.31 | 0.35 | 0.15 | | 0.20 | | | | |

Table 1-3

| | elements | | | | | | | | | | | | | | | | | |
|---|---|---|---|---|---|---|---|---|---|---|---|---|---|---|---|---|---|---|
| | C | N | Si | Mn | P | s | Cr | Al | Ti | Nb | Mo | Cu | Ni | V | Sn | Sb | B | Zr |
| 31 | 0.005 | 0.010 | 0.19 | 0.21 | 0.030 | 0.0010 | 17.3 | 0.090 | 0.22 | 0.15 | 0.30 | | | 0.05 | | | | |
| 32 | 0.006 | 0.011 | 0.25 | 0.25 | 0.031 | 0.0015 | 17.0 | 0.150 | 0.25 | 0.31 | 2.40 | | | 0.10 | | | | |
| 33 | 0.005 | 0.012 | 0.17 | 0.19 | 0.030 | 0.0003 | 18.6 | 0.060 | 0.17 | 0.25 | 1.92 | | | | | | | |
| 34 | 0.013 | 0.011 | 0.26 | 0.29 | 0.021 | 0.0022 | 21.2 | 0.120 | 0.25 | 0.19 | 0.69 | 0.19 | | | | | | |
| 35 | 0.006 | 0.009 | 0.11 | 0.22 | 0.020 | 0.0025 | 19.3 | 0.090 | 0.17 | 0.16 | 1.51 | | 1.10 | 0.16 | | | | |
| 36 | 0.011 | 0.011 | 0.18 | 0.25 | 0.026 | 0.0011 | 22.0 | 0.050 | 0.15 | 0.19 | 0.66 | | | 0.12 | 0.14 | | | |
| 37 | 0.006 | 0.010 | 0.08 | 0.10 | 0.020 | 0.0010 | 20.5 | 0.010 | 0.08 | 0.30 | 1.11 | | | | | | | |
| 38 | 0.004 | 0.011 | 0.23 | 0.13 | 0.024 | 0.0015 | 18.3 | 0.150 | 0.25 | 0.16 | 0.35 | | | | | | | |
| 39 | 0.006 | 0.012 | 0.12 | 0.13 | 0.020 | 0.0011 | 18.8 | 0.040 | 0.15 | 0.18 | 1.40 | | | | | | | |
| 40 | 0.005 | 0.002 | 0.13 | 0.14 | 0.022 | 0.0010 | 22.2 | 0.060 | 0.14 | 0.19 | 1.12 | | | | | | | |
| 41 | 0.005 | 0.011 | 0.19 | 0.15 | 0.020 | 0.0010 | 16.5 | 0.100 | 0.20 | 0.19 | 1.80 | | | | | | | |
| 42 | 0.007 | 0.012 | 0.11 | 0.12 | 0.021 | 0.0008 | 24.5 | 0.050 | 0.12 | 0.12 | 0.31 | | | | | | | |

Table 1-4

| No. | Formula (1) Si+2.5Al+3Ti | Corrosion depth (Cu²⁺: 2 ppm) Back surface/μm | Crevice/μm | Corrosion depth (Cu²⁺:20 ppm) Back surface/μm | Crevice/μm | Formula (2) Wb/2t | Formula (3) Nb*V | Weld zone hardness/HV 0.5 kgf | '(Nb+Ti)/(C+N) | |
|---|---|---|---|---|---|---|---|---|---|---|
| 1 | 1.31 | 15 | 35 | 19 | 48 | 1.25 | | 165 | 18.3 | Ref. ex. |
| 2 | 0.91 | 8 | 21 | 12 | 29 | 1.38 | 0.040 | 201 | 30.0 | **inv.** ex. |
| 3 | 0.60 | 7 | 11 | 5 | 20 | 0.50 | | 170 | 23.1 | Ref. ex. |
| 4 | 0.83 | 8 | 13 | 21 | 61 | 1.63 | 0.043 | 195 | 21.8 | **inv.** ex. |
| 5 | 0.79 | 5 | 9 | 9 | 17 | 0.13 | | 170 | 15.7 | Ref. ex. |
| 6 | 0.60 | <3 | 8 | 5 | 19 | 0.94 | 0.040 | 212 | 23.0 | Inv. ex. |
| 7 | 0.70 | 4 | 10 | 8 | 25 | 1.25 | 0.053 | 203 | 23.3 | **inv.** ex. |
| 8 | 0.70 | <3 | 8 | 6 | 18 | 0.13 | 0.029 | 189 | 23.1 | **inv.** ex. |
| 9 | 0.62 | <3 | 10 | 5 | 28 | 0.31 | 0.120 | 215 | 30.0 | **inv.** ex. |
| 10 | 0.85 | <3 | 14 | 6 | 21 | 1.00 | 0.026 | 182 | 22.0 | Inv. ex. |
| 11 | 0.47 | <3 | 10 | 3 | 25 | 1.13 | 0.144 | 222 | 13.6 | **inv.** ex. |
| 12 | 0.70 | <3 | 11 | 4 | 20 | 0.81 | 0.045 | 200 | 23.9 | **inv.** ex. |
| 13 | 0.74 | <3 | 7 | 6 | 20 | 0.88 | 0.023 | 196 | 24.4 | **inv.** ex. |

(continued)

| No. | Formula (1) Si+2.5Al+3Ti | Corrosion depth (Cu$^{2+}$: 2 ppm) | | Corrosion depth (Cu$^{2+}$·20 ppm) | | Formula (2) Wb/2t | Formula (3) Nb*V | Weld zone hardness/HV 0.5 kgf | '(Nb+Ti)/(C+N) | |
|---|---|---|---|---|---|---|---|---|---|---|
| | | Back surface/ μm | Crevice/ μm | Back surface/ μm | Crevice/ μm | | | | | |
| 14 | 1.05 | 15 | 25 | 19 | 42 | 1.44 | 0.015 | 184 | 23.3 | inv. ex. |
| 15 | 0.61 | <3 | 11 | 6 | 29 | 1.06 | 0.063 | 202 | 30.8 | inv. ex. |

Table 1-5

| No. | Formula (1) Si+2.5Al+3Ti | Corrosion depth (Cu":2 ppm) | | Corrosion depth ($Cu^{2+}$:20 ppm) | | Formula (2) Wb/2t | Formula (3) Nb*V | Weld zone hardness/HV 0.5 kgf | (Nb+Ti) / (C+N) | |
|---|---|---|---|---|---|---|---|---|---|---|
| | | Back surface/μm) | Crevice/μm | Back surface/μm | Crevice/μm | | | | | |
| 16 | 0.74 | <3 | 7 | 5 | 20 | 0.50 | 0.020 | 191 | 26.9 | Inv. ex. |
| 17 | 0.59 | <3 | 10 | 3 | 29 | 0.94 | 0.038 | 211 | 11.6 | Inv. ex. |
| 18 | 0.76 | <3 | 9 | 8 | 26 | 0.94 | 0.023 | 201 | 15.5 | Inv. ex. |
| 19 | 0.69 | <3 | 11 | 5 | 19 | 0.88 | 0.070 | 200 | 15.0 | Inv. ex. |
| 20 | 0.80 | <3 | 14 | 6 | 22 | 0.75 | 0.099 | 220 | 22.9 | Inv. ex. |
| 21 | 0.85 | <3 | 16 | 8 | 27 | 0.94 | 0.029 | 197 | 18.3 | Inv. ex. |
| 22 | 0.89 | <3 | 18 | 12 | 29 | 1.25 | 0.034 | 210 | 48.3 | Inv. ex. |
| 23 | 1.64 | 20 | 52 | 26 | 72 | 1.50 | 0.032 | 185 | 18.4 | Comp. ex. |
| 24 | 1.52 | 22 | 57 | 29 | 61 | 0.94 | 0.025 | 196 | 32.1 | Comp. ex. |
| 25 | 1.83 | 29 | 51 | 35 | 96 | 1.00 | 0.001 | 167 | 10.8 | Comp. ex. |
| 26 | 1.97 | 33 | 66 | 66 | 115 | 1.88 | | 164 | 23.3 | Comp. ex. |
| 27 | 1.02 | 22 | 56 | 33 | 69 | 1.50 | | 155 | 16.2 | Comp. ex. |
| 28 | 0.80 | 21 | 61 | 35 | 155 | 1.69 | | 233 | 0.5 | Comp. ex. |
| 29 | 1.20 | 26 | 51 | 36 | 62 | 0.94 | 0.010 | 188 | 17.9 | Comp. ex. |
| 30 | 0.90 | 10 | 15 | 19 | 28 | 1.25 | 0.062 | 200 | 37.1 | Inv. ex. |

EP 2 692 891 B1

17

Table 1-6

| No. | Formula (1) Si+2.5Al+3Ti | 'Corrosion depth ($Cu^{2+}$:2 ppm) | | Corrosion depth ($Cu^{2+}$:20 ppm) | | Formula (2) Wb/2t | Formula (3) Nb*V | Weld zone hardness/HV 0.5 kgf | (Nb+Ti)/ (C+N) | |
|---|---|---|---|---|---|---|---|---|---|---|
| | | Back surface/ $\mu$m | Crevice/ $\mu$m | Back surface/ $\mu$m | Crevice/ $\mu$m | | | | | |
| 31 | 1.08 | 5 | 16 | 10 | 44 | 1.38 | 0.008 | 169 | 25.0 | Ref. ex. |
| 32 | 1.38 | 5 | 33 | 18 | 49 | 1.31 | 0.031 | 198 | 32.9 | Inv. ex. |
| 33 | 0.83 | 7 | 12 | 15 | 24 | 0.94 | | 166 | 24.7 | Ref. ex. |
| 34 | 1.31 | 15 | 25 | 19 | 44 | 1.31 | | 166 | 18.3 | Ref. ex. |
| 35 | 0.85 | 7 | 12 | 14 | 26 | 1.00 | 0.026 | 193 | 22.0 | Inv. ex. |
| 36 | 0.76 | <3 | 8 | 8 | 20 | 0.94 | 0.023 | 200 | 15.5 | Inv. ex. |
| 37 | 0.35 | <3 | 10 | 9 | 18 | 0.75 | | 165 | 23.8 | Ref. ex. |
| 38 | 1.36 | 15 | 40 | 19 | 47 | 0.94 | | 152 | 27.3 | Ref. ex. |
| 39 | 0.67 | 10 | 18 | 13 | 30 | 0.94 | | 156 | 18.3 | Ref. ex. |
| 40 | 0.70 | <3 | 8 | 12 | 20 | 0.13 | | 171 | 19.4 | Ref. ex. |
| 41 | 1.04 | 17 | 39 | 35 | 78 | 1.69 | | 164 | 24.4 | Ref. ex. |
| 42 | 0.60 | <3 | 9 | 11 | 21 | 0.94 | | 175 | 15.8 | Ref. ex. |

18

The results of the evaluation after this test are shown in Table 1. Due to this, under conditions of a value of Si+2.5Al+3Ti of 1.50 or less, at conditions of 2 ppm-$Cu^{2+}$, the corrosion depth of the back surface weld zone became 20 $\mu$m or less and the crevice corrosion depth of the weld crevice became 50 $\mu$m or less. Further, in addition to the above, under conditions of a Wb/2t of 1.50 or less, even at severe corrosion conditions of 20 ppm of $Cu^{2+}$, the corrosion depth of the back surface weld zone became 20 $\mu$m or less and the crevice corrosion depth of the weld crevice part became 50 $\mu$m or less.

Furthermore, under conditions satisfying the above (1) and (2) and where Nb$\times$V is 0.01 or more, the weld zone exhibits a strength of the prescribed value or more. Note that, No. 28 is an example where Nb$\times$V does not satisfy the condition of being 0.01 or more, but C and N are high, so the martensite structure precipitates at the weld metal zone and therefore the hardness becomes higher. However, this structure does not exhibit a sufficient corrosion resistance in this environment, so even if the value of Si+2.5Al+3Ti satisfies the condition of being 1.50 or less, the amount of corrosion becomes large in the results.

On the other hand, even if the value of Si+2.5Al+3Ti exceeds 1.50 or satisfies the condition of being 1.50 or less, under conditions where Cr, Mo, and other elements are outside the scope of the present invention, the crevice corrosion depth of the weld crevice part exceeds 50 $\mu$m in the results. In crevice corrosion under a more severe corrosive environment of conditions of 20 ppm-$Cu^{2+}$, under conditions where Wb/2t does not satisfy the condition of being 1.50 or less, the crevice corrosion depth exceeds 50 $\mu$m in the results.

From the above results, under conditions satisfying the scope of elements of the present invention and where Si+2.5Al+3Ti is within the prescribed value, even if omitting the Ar gas shield, the weld zone corrosion resistance can be improved. Furthermore, by making the value of the bead width ratio Wb/2t of the weld back surface within a prescribed value, improvement of the weld zone corrosion resistance in a severe corrosive environment also becomes possible. By also making Nb$\times$V a predetermined value or more, an improvement in the strength of the weld metal zone is obtained.

Industrial Applicability

The ferritic stainless steel of the present invention can be suitably used for a member which requires excellent weld zone corrosion resistance in a structure which has a TIG weld zone such as various cold water storage and hot water tanks for cold water and hot water in addition to the above-mentioned hot water tanks. Furthermore, it becomes possible to provide the optimum material even when a more severe corrosive environment is envisioned such as the case of a crevice in a weld joint structure.

Similarly, a TIG welded structure which has a crevice structure and which requires weld zone strength can exhibit similar properties. For example, this is also suitable for general applications and members such as home electric appliances, bathtubs, kitchen equipment, latent heat recovery type gas hot water heaters and their drain water recovery devices and their heat exchangers, various types of welded pipes, etc.

Reference Signs List

1 steel sheet
2 steel sheet
3 weld metal zone
4 back surface weld zone
5 weld crevice part
6 anti-torch side
7 torch side
8 back bead part

**Claims**

1. A welded structure having a TIG welded crevice structure obtained by welding, while omitting an Ar gas shield at an anti-torch side, together ferritic stainless steel sheets by TIG welding, wherein the composition of said ferritic stainless steel sheet consists of, by mass%,
   C: 0.002 to 0.020%,
   Si: 0.05 to 0.30%,
   Mn: 0.01 to 0.50%,
   Cr: 16.0 to 25.0%,

Mo: 0.30 to 3.00%,
Al: 0.005 to 0.150%,
Ti: 0.05 to 0.30%,
Nb: 0.10 to 0.50%,
N: 0.002 to 0.025%,
P: 0.035% or less,
S: 0.0100% or less, and
V: 0.05 to 1.00%, and
further optionally one or more of, by mass%:

Cu: 0.10 to 0.50%,
Ni: 0.05 to 2.00%,
Sn: 0.05 to 1.00%,
Sb: 0.05 to 1.00%,
Zr: 0.03 to 0.20%, and
B: 0.0001 to 0.0050%; and

a balance of Fe and unavoidable impurities,
wherein the contents of Si, Al, and Ti satisfy formula (1), and
wherein a bead width Wb of weld metal exposed at a back surface of said ferritic stainless steel sheet at said TIG welded part and a sheet thickness "t" of said ferritic stainless steel sheet satisfy formula (2):

$$Si + 2.5Al + 3Ti \leq 1.50 \quad (formula\ (1))$$

$$0 < Wb/2t \leq 1.50 \quad (formula\ (2))$$

wherein the symbols of the elements of formula (1) mean the mass% of content of those elements, **characterized in that** Nb and V in the composition of said ferritic stainless steel satisfy formula (3):

$$Nb \times V \geq 0.01 \quad (formula\ (3))$$

wherein the symbols of the elements of formula (3) mean the mass% of content of those elements.


**Patentansprüche**

1. Eine geschweißte Struktur mit einer TIG-geschweißten Spaltstruktur, die durch Zusammenschweißen von ferritischen Edelstahlblechen durch TIG-Schweißen unter Weglassen eines Ar-Schutzgases an einer Anti-Brennerseite erhalten wird, wobei die Zusammensetzung des ferritischen Edelstahlblechs aus, in Massen-%, besteht,
C: 0,002 bis 0,020%,
Si: 0,05 bis 0,30%,
Mn: 0,01 bis 0,50%,
Cr: 16,0 bis 25,0%,
Mo: 0,30 bis 3,00%,
Al: 0,005 bis 0,150%,
Ti: 0,05 bis 0,30%,
Nb: 0,10 bis 0,50%,
N: 0,002 bis 0,025%,
P: 0,035% oder weniger,
S: 0,0100% oder weniger und
V: 0,05 bis 1,00%, und
ferner gegebenenfalls einem oder mehreren von, in Massen-%:

Cu: 0,10 bis 0,50%,

Ni: 0,05 bis 2,00%,
Sn: 0,05 bis 1,00%,
Sb: 0,05 bis 1,00%,
Zr: 0,03 bis 0,20% und
B: 0,0001 bis 0,0050%; und

einem Rest an Fe und unvermeidbaren Verunreinigungen,
wobei die Anteile von Si, Al, und Ti die Formel (1) erfüllen, und
wobei eine Wulstbreite Wb von Schweißgut, das an einer rückseitigen Oberfläche des ferritischen Edelstahlblechs bei dem TIG-geschweißten Teil und bei einer Blechdicke "t" des ferritischen Edelstahlblechs freiliegt, die Formel (2) erfüllt:

$$Si + 2{,}5Al + 3Ti \leq 1{,}50 \ (Formel \ (1))$$

$$0 < Wb/2t \leq 1{,}50 \ (Formel \ (2)),$$

wobei die Elementsymbole in Formel (1) die Massen-% des Gehalts dieser Elemente bezeichnen,
**dadurch gekennzeichnet, dass** Nb und V in der Zusammensetzung des ferritischen Edelstahls die Formel (3) erfüllen:

$$Nb \times V \geq 0{,}01 \ (Formel \ (3)),$$

wobei die Elementsymbole der Formel (3) die Massen-% des Gehalts dieser Elemente bezeichnen.

## Revendications

1. Structure soudée ayant une structure de fente soudée TIG obtenue par soudage, tout en omettant une protection de gaz Ar au niveau d'un côté opposé au chalumeau, ensemble de tôles en acier inoxydable ferritique par soudage TIG, où les ingrédients de ladite tôle en acier inoxydable ferritique consistent en, en % en masse,
C: 0,002 à 0,020%,
Si: 0,05 à 0,30%,
Mn: 0,01 à 0,50%,
Cr: 16,0 à 25,0%,
Mo: 0,30 à 3,00%,
Al: 0,005 à 0,150%,
Ti: 0,05 à 0,30%,
Nb: 0,10 à 0,50%,
N: 0,002 à 0,025%,
P: 0,035% ou moins,
S: 0,0100% ou moins, et
V: 0,05 à 1,00%, et
en outre éventuellement un ou plusieurs de, en % en masse:

Cu: 0,10 à 0,50%,
Ni: 0,05 à 2,00%,
Sn: 0,05 à 1,00%,
Sb: 0,05 à 1,00%,
Zr: 0,03 à 0,20% et
B: 0,0001 à 0,0050%; et

un complément de Fe et d'impuretés inévitables,
où les teneur de Si, Al et Ti satisfont la formule (1), et
où une largeur de bourrelet Wb de métal de soudage exposé au niveau d'une surface dorsale de ladite tôle en acier inoxydable ferritique au niveau de ladite partie soudée TIG et une épaisseur de tôle "t" de ladite tôle en acier inoxydable ferritique satisfont la formule (2):

$$Si + 2,5Al + 3Ti \leq 1,50 \quad \text{(formule (1))}$$

$$0 < Wb/2t \leq 1,50 \quad \text{(formule (2))}$$

où les symboles des éléments de formule (1) signifient le % en masse de teneur de ces éléments, **caractérisée en ce que** Nb et V dans les ingrédients dudit acier inoxydable ferritique satisfont la formule (3):

$$Nb \times V \geq 0,01 \quad \text{(formule (3))}$$

où les symboles des éléments de formule (3) signifient le % en masse de teneur de ces éléments.

# FIG. 1

# FIG. 2

（a）

（b）

SHEET
THICKNESS : t

BACK BEAD WIDTH : Wb

# FIG. 3

# FIG. 4

# FIG. 5

## (a)

## (b)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009185382 A
- JP 2010202916 A
- JP 2011202254 A
- JP 11323502 A
- JP 2009161836 A